# EUROPEAN PATENT APPLICATION

(11) **EP 4 160 864 A1**
(43) Date of publication of application: **05.04.2023**
(21) Application number: 22826635.9
(22) Date of filing: 27.04.2022
(51) Int. Cl.: H02J 7/00

(54) **ELECTRONIC DEVICE**

(30) Priority: 13.07.2021 CN 202110791323
(71) Applicant: Honor Device Co., Ltd., Shenzhen, Guangdong 518040 (CN)
(72) Inventor: MAO, Yang, Shenzhen, Guangdong 518040 (CN); ZHANG, Tieli, Shenzhen, Guangdong 518040 (CN); ZHANG, Changying, Shenzhen, Guangdong 518040 (CN)
(74) Representative: Gill Jennings & Every LLP
(86) International application number: PCT/CN2022/089440
(87) International publication number: WO 2023/284365

(57) **Abstract**

This application provides an electronic device in which a distance between a connection end of a first battery and a first power conversion module corresponding to the first battery is within a certain small range, which can reduce a length of a current path between the first power conversion module and the first battery, and avoid corresponding heat generation. In addition, a distance between the first power conversion module and a processor is relatively long. In this case, even if the electronic device is charged in a use state, two hot spots, the first power conversion module and the processor, can be dispersed, so that overall heat dissipation of the electronic device is uniform, temperature rise is slow, a situation that the electronic device reaches a thermal current limit temperature thereof is delayed and even avoided, and further a charging speed of the electronic device is improved. In addition, a second battery and the first battery may be arranged in different directions in the electronic device, to further improve the charging speed of the electronic device when the electronic device is charged in a standby state.

## Description

This application claims priority to Chinese Patent Application No. 202110791323.7, filed with the China National Intellectual Property Administration on July 13, 2021 and entitled "ELECTRONIC DEVICE", which is incorporated herein by reference in its entirety.

### TECHNICAL FIELD

This application relates to the field of power electronics technologies, and in particular, to an electronic device.

### BACKGROUND

Generally, when an electronic device such as a mobile phone is being charged, there is a certain temperature rise on a battery part thereof. Especially in the current situation that a quick charging function is widely used, as a charging power increases, a heat generation amount during charging is further increased.

A common scenario is that the mobile phone is charged in a use state. In this case, an overall heat generation amount of the mobile phone increases severely, which raises the temperature of the mobile phone quickly and easily reach a thermal current limit temperature thereof. Further, an overheating protection action is frequently triggered, resulting in an increase in charging time and a slow charging speed.

### SUMMARY

In view of this, this application provides an electronic device, so as to delay or avoid a situation that the electronic device reaches a thermal current limit temperature thereof and to improve a charging speed.

In order to achieve the foregoing objective, this application provides the following technical solutions:

A first aspect of this application provides an electronic device, including: a processor, a charging interface, a first battery and a first power conversion module corresponding thereto. The charging interface is configured to externally connect to a charging apparatus, so that the charging apparatus charges the first battery through the first power conversion module. In addition, a distance between a connection end of the first battery and the first power conversion module is less than a first preset distance, which can reduce a length of a current path between the first power conversion module and the first battery, and avoid corresponding heat generation. Furthermore, a distance between the first power conversion module and the processor is greater than a second preset distance. In addition, the second preset distance is greater than the first preset distance. In this case, even if the electronic device is charged in a use state, two hot spots, the first power conversion module and the processor, can be dispersed, so that overall heat dissipation of the electronic device is uniform, temperature rise is slow, a situation that the electronic device reaches a thermal current limit temperature thereof is delayed and even avoided, and further a charging speed of the electronic device is improved.

In a possible implementation, the first power conversion module and the processor are respectively close to different sides in the electronic device.

In another possible implementation, the power conversion module of the first battery and the processor are respectively close to opposite sides in the electronic device.

In a possible implementation, the first power conversion module and the processor are respectively arranged on different substrates.

In another possible implementation, a second battery and a second power module are further included. When the charging interface is externally connected to the charging apparatus, the charging apparatus further charges the second battery through the second power conversion module; and a distance between a connection end of the second battery and the second power conversion module is less than the first preset distance. Further, an arrangement direction of the second battery in the electronic device is different from that of the first battery, and the electronic device can achieve dispersion of the hot spots during charging in the use state. In addition, when the electronic device is charged in a standby state, because arrangement directions of the second battery and the first battery in the electronic device are different, there is a certain distance between connection ends of the two batteries, and there is a certain distance between the two power conversion modules. Even if the two power conversion modules work at the same time, it can be ensured that heat generation is dispersed, temperature rise is slow, and a speed at which a temperature reaches a preset thermal current limit temperature in the processor becomes slower, increasing time of high-current charging and a charging speed.

In another possible implementation, arrangement directions of the second battery and the first battery in the electronic device are opposite.

In another possible implementation, the connection end of the first battery and the connection end of the second battery are connected in parallel through a connection module, to provide system power to the processor.

In another possible implementation, when the electronic device is a foldable phone, the first battery and the second battery are respectively located on two sides of a folding central line of the foldable phone.

In another possible implementation, the first battery corresponds to one or more of the first power modules.

When the first battery corresponds to a plurality of the first power modules, a distance between each of the first power conversion modules and the processor is greater than the second preset distance.

In another possible implementation, the processor is configured to: in a process that the charging apparatus charges the electronic device, determine whether a temperature of the electronic device is greater than a preset value in real time or periodically; and if the temperature of the electronic device is greater than the preset value, control the electronic device to change a charging state, so that at least one of the power conversion modules maintains normal operation, and at least one another power conversion module is turned off or operated at a reduced power.

In another possible implementation, the temperature of the electronic device is: a detection temperature of any temperature sensor in the electronic device.

In another possible implementation, the preset value is less than a preset thermal current limit temperature in the processor.

In another possible implementation, the processor is further configured to: determine whether the electronic device is in a use state; and if the electronic device is in the use state, determine whether the temperature of the electronic device is greater than the preset value in real time or periodically.

In another possible implementation, when the electronic device further includes the second battery and the second power conversion module, the processor is configured to control the electronic device to change the charging state, so that at least one of the power conversion modules maintains normal operation, at least one another power conversion module is turned off or operated at the reduced power, and the processor is specifically configured to:

control the first power conversion module of the electronic device to maintain normal operation, and the second power conversion module to be turned off or operated at the reduced power.

It should be understood that descriptions of technical features, technical solutions, beneficial effects or similar languages in this application do not imply that all features and advantages can be achieved in any single embodiment. On the contrary, it may be understood that descriptions of features or beneficial effects mean that a particular technical feature, technical solution, or beneficial effect is included in at least one embodiment. Therefore, descriptions of the technical features, technical solutions, or beneficial effects in this specification do not necessarily refer to a same embodiment. Further, the technical features, technical solutions, and beneficial effects described in the embodiments may be combined in any suitable manner. A person skilled in the art understands that the embodiments can be implemented without one or more particular technical features, technical solutions, or beneficial effects of a particular embodiment. In other embodiments, additional technical features and beneficial effects may be further identified in a particular embodiment that does not embody all embodiments.

### BRIEF DESCRIPTION OF DRAWINGS

To describe the technical solutions in the embodiments of this application or in the related art more clearly, the following briefly describes the accompanying drawings required for describing the embodiments or the related art. Apparently, the accompanying drawings in the following descriptions show merely the embodiments of this application, and a person of ordinary skill in the art may still derive other drawings from the accompanying drawings without creative efforts.
FIG. 1 is a schematic structural diagram of an electronic device provided in the related art;
FIG. 2 is a schematic diagram of charging a mobile phone in a use state according to an embodiment of the present invention;
FIG. 3 is a schematic structural diagram of an electronic device according to an embodiment of the present invention;
FIG. 4 to FIG. 6 are three schematic structural diagrams of an electronic device according to an embodiment of the present invention; and
FIG. 7 is a flowchart when a processor performs corresponding functions according to an embodiment of the present invention.

### DESCRIPTION OF EMBODIMENTS

In the specification, claims, and accompanying drawings of this application, the terms "first", "second", "third", and the like are intended to distinguish between different objects but do not indicate a particular order.

In the embodiments of this application, the terms such as "exemplary" and "example" are used to represent giving an example, an illustration or a description. Any embodiment or design scheme described as an "exemplary" or "for example" in the embodiments of this application should not be explained as being more preferred or having more advantages than another embodiment or design scheme. Exactly, use of the word "exemplary" or "for example" or the like is intended to present a related concept in a specific manner.

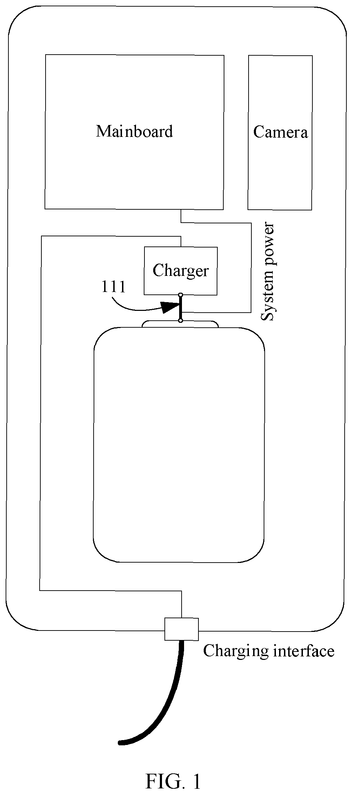

In the current solution for achieving a quick charging function, specifications of a high voltage and high current adopted by an external power supply are usually 1 1V/6A, 20V/6A, and the like. In order to adapt to a standard voltage of a 3.7V mobile phone battery, a technical idea is to adopt a solution shown in FIG. 1. After entering a mobile phone through a charging interface, an external high voltage needs to pass through a corresponding Charger, that is, a DCDC circuit, to reduce the voltage, and to convert a voltage of 11V or 20V to about 4.2V to charge the battery. However, in this voltage conversion process, it is inevitable to generate loss and form heat.

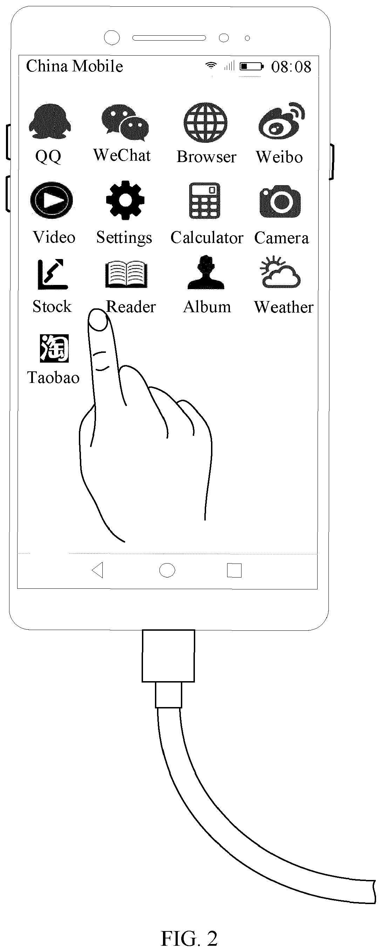

Especially in a scenario where a user is charging the mobile phone while using the mobile phone, that is, when the mobile phone is charged in a use state, not only the charging process heats up the Charger to, but also in the use state, such as in a screen-on state (as shown in FIG. 2) or in a screen-off and music-on state, a system-on-a-chip (System-on-a-Chip, SoC) of the mobile phone also generates heat due to operating in the use state. In the interior of the mobile phone shown in FIG. 1, because the Charger is quite close to a mainboard where the SoC is arranged, and in some scenarios, the Charger is even directly arranged on the mainboard, heat generation of both the Charger and the SoC usually forms heat superposition, and an overall heat generation amount of the mobile phone increases severely, so that a temperature of the mobile phone rises quickly and easily reaches a thermal current limit temperature Tth. When the thermal current limit temperature Tth is reached, an overheating protection action is triggered, limiting a charging current and even temporarily stopping charging. In addition, if a heat dissipation device of the mobile phone is insufficient to continuously keep the temperature of the mobile phone below the thermal current limit temperature Tth, the overheating protection action is frequently triggered. Any triggering of the overheating protection action results in an increase of charging time, which further slows down the charging speed of the mobile phone.

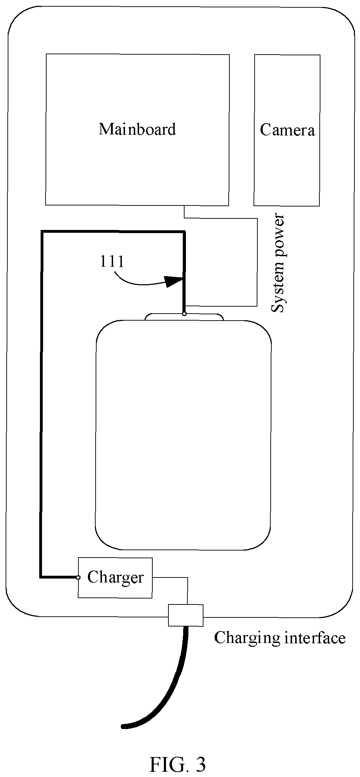

To prevent the temperature of the mobile phone from reaching the thermal current limit temperature Tth, or to delay time that the mobile phone reaches the thermal current limit temperature Tth, the Charger can be arranged at another position, such as the bottom of the mobile phone (as shown in FIG. 3), to keep the Charger away from the SoC and avoid heat superposition during charging in the use state.

However, after further researching, the inventor found that, due to high-current transmission between the Charger and a connection end of the battery, a line 111 between the Charger and the connection end of the battery generates heat. In addition, due to position change of the Charger, a length of the line 111 increases from a length shown in FIG. 1 to a length shown in FIG. 3, and the heat generation amount brought by the increase in the length of the line 111 affects the overall cooling effect of the electronic device, that is, the mobile phone.

Therefore, an embodiment of the present invention provides an electronic device, which is applicable to a quick charging solution of the current electronic device, can delay or even avoid a situation that the electronic device reaches a thermal current limit temperature Tth thereof, and improve a charging speed.

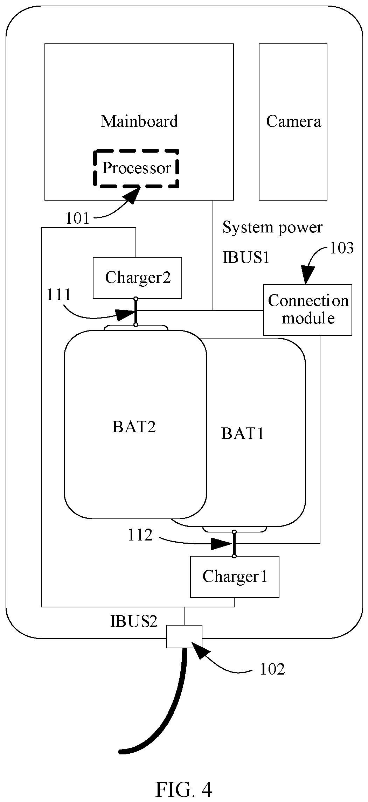

The electronic device, such as a mobile phone, a tablet computer, a notebook computer, a wearable electronic device, or a smart watch, as shown in FIG. 4, includes: a processor 101, a charging interface 102, a BAT1 (that is, a first battery), and a Charger1 (that is, a first power conversion module) corresponding thereto, a BAT2 (that is, a second battery), and a Charger2 (that is, a second power conversion module) corresponding thereto.

The processor 101 may be specifically a SoC in a device such as a mobile phone or a smart watch, or a central processing unit in a device such as a tablet computer or a notebook computer.

An outer side of the charging interface 102 is configured to connect to a charging apparatus, an inner side of the charging interface 102 is respectively connected to an input end of the Charger1 and an input end of the Charger2, an output end of the Charger1 is connected to a connection end of the BAT1, and an output end of the Charger2 is connected to a connection end of the BAT2, so that the charging apparatus can charge the BAT1 with electric energy (a current is an IBUS2 shown in the figure) through the charging interface 102 through the Charger1, and charge the BAT2 through the Charger2. The Charger1 and the Charger2 may be specifically a buck circuit, a buck-boost circuit, or the like, which is not specifically limited herein.

In this embodiment, a distance between the connection end of the BAT1 and the Charger1, and a distance between the connection end of the BAT2 and the Charger2, that is, a straight-line distance from the output end of the power conversion module to the connection end of the corresponding battery, are set to be less than a first preset distance. The first preset distance is a relatively small distance, so that a current path 112 between the Charger1 and the BAT1, and a current path 111 between the Charger2 and the BAT2 are as short as possible, to reduce a heat generation amount on the two current paths under high-current charging. In an actual application, a specific value of the first preset distance is not limited, as long as a heat generation amount of the current path between the power conversion module and the corresponding battery can be controlled within a certain range.

Furthermore, a distance between the Charger1 and the processor 101, that is, a distance between corresponding edges of the Charger1 and the processor 101 closest to each other, is greater than a second preset distance. The second preset distance is a value greater than the first preset distance, which is not specifically limited, as long as the distance between the Charger1 and the processor 101 in the electronic device is relatively long. Furthermore, even if the electronic device is charged in the use state, heat generated by two heat generation devices, the Charger1 and the processor 101 respectively, does not form heat superposition due to the close position. That is, in the electronic device provided in this embodiment, by arranging the Charger1 away from the processor 101, the Charger1 used for voltage conversion is further moved away from the processor 101, so that when the electronic device is charged in the use state, two hot spots, the Charger 1 and the processor 101 can be dispersed, overall heat dissipation of the electronic device is uniform, temperature rise is slow, and a situation that the electronic device reaches a thermal current limit temperature Tth thereof is delayed or even avoided, thereby increasing a charging speed.

In an actual application, in order to achieve a relatively long distance between the Charger1 and the processor 101 in the electronic device, the Charger1 and the processor 101 can be respectively arranged close to different sides in the electronic device, for example, close to an opposite pair of sides in the electronic device. FIG. 4 illustrates an example in which the processor 101 and a camera Camera are close to a top side of the electronic device, and the charger 1 is close to a bottom side of the electronic device. The actual application is not limited thereto, and positions of the Charger1 and the processor 101 can be set according to an actual situation, as long as the distance between the Charger1 and the processor 101 is greater than the second preset distance.

In addition, in the electronic device provided in this embodiment, an arrangement direction of the BAT2 in the electronic device is opposite to that of the BAT1. FIG. 4 illustrates a specific example in which the Charger2 is closer to the processor 101 and can be directly arranged on a mainboard 201 where the processor 101 is located. However, compared to the BAT2, an arrangement direction of the BAT1 is rotated by 180°, and the Charger1 of the BAT1 can be arranged on another substrate, such as a substrate of another circuit in the position, or arranged on a separate substrate, thereby making the Charger1 of the BAT1 away from the processor 101, avoiding heat superposition between the Charger1 and the processor 101, and achieving dispersion of the hot spots during charging in the use state.

According to the specific example provided in this embodiment, the dispersion of the hot spots can be achieved during charging in the use state. In addition, because the BAT1 and the BAT2 are arranged in different directions in the electronic device, there is also a certain distance between connection ends of the two batteries, and there is also a certain distance between the Charger1 and the Charger2. Even if the electronic device is charged in a standby state, and the Charger1 and the Charger2 work at the same time, it can be ensured that heat generation is dispersed, temperature rise is slow, and a speed at which a temperature reaches a preset thermal current limit temperature Tth in the processor 101 becomes slower, increasing time of high-current charging and a charging speed.

In an actual application, the arrangement directions of the BAT1 and the BAT2 are not limited to a situation shown in FIG. 4, and there may be any angle between the BAT1 and the BAT2. For example, the BAT2 can also be horizontally arranged. As long as the arrangement direction of the BAT2 in the electronic device is different from that of the BAT1, a certain distance can be maintained between the Charger1 and the Charger2, which can increase the charging speed in the standby state. In addition, the BAT2 can also be arranged in the same direction as the BAT1, but because in this case, the distance between the Charger1 and the Charger2 is relatively close, it is not easy to increase the charging speed in the standby state.

In a specific example, the connection ends of the BAT1 and the BAT2 are connected in parallel through a connection module 103, which supplies system power after connected in parallel, and a current thereof is an IBUS1 shown in the figure, at least for the processor 101.

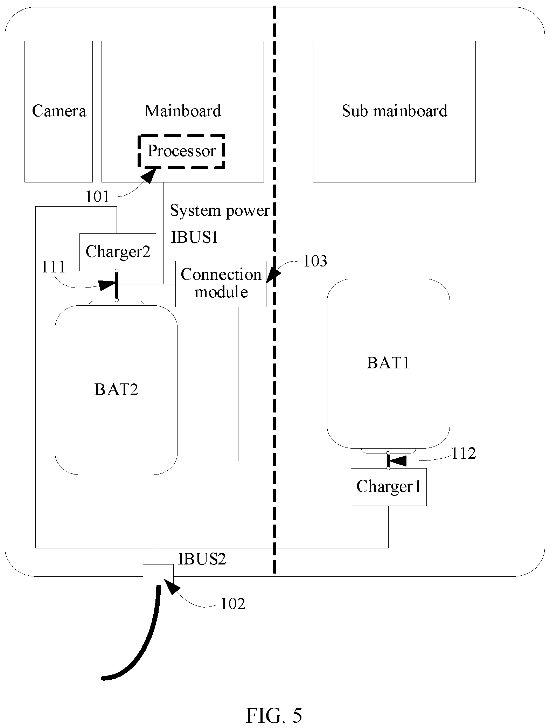

It should be noted that, the electronic device is not limited to a bar phone electronic device, and may also be a foldable phone electronic device. When the electronic device is a foldable phone, a BAT1 and a BAT2 of the foldable phone can respectively be located on two sides of a folding central line of the foldable phone, which is more convenient for a component layout inside the foldable phone. Therefore, the situation shown in FIG. 4 may be a schematic diagram of an internal structure of the bar phone electronic device, or a schematic structural diagram of the foldable phone electronic device in a folded state. FIG. 5 is a schematic structural diagram of the foldable phone electronic device in an unfolded state, and settings and principles of a charging method thereof are the same as those described above, which are not repeated herein. In addition, as shown in FIG. 5, a sub mainboard is further arranged on an other side of the folding central line in the foldable phone electronic device.

In an actual application, quantities of the BAT1 and the BAT2 are not limited to 1. The quantities of the BAT1 and the BAT2 can be respectively determined according to specific application environments thereof, as long as corresponding functions described above can be respectively implemented.

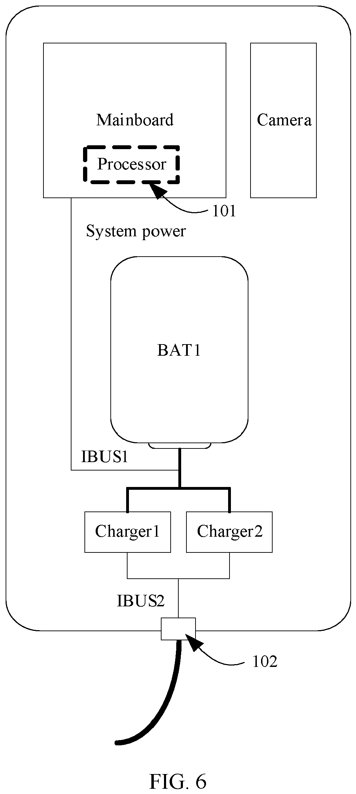

In addition, a relationship between the battery and the power conversion module may be a one-to-one relationship (as shown in FIG. 4 and FIG. 5), or may be that one battery is charged by a plurality of power conversion modules, or the BAT2 may be removed, and only the BAT1 is arranged. FIG. 6 illustrates a specific example in which one BAT1 is charged by the Charger1 and the Charger2 at the same time. In this case, although the electronic device cannot increase the charging speed in the standby state because the Charger1 and the Charger2 are close to the connection end of the BAT1, the distance between the Charger1 and the processor 101, and the distance between the Charger2 and the processor 101 are greater than the second preset distance, which can ensure that heat generation between the power conversion module and the processor 101 is dispersed during charging in the use state.

It may be understood that the structure shown in the foregoing embodiment does not constitute a specific limitation on the electronic device. In some other embodiments, the electronic device may include more or fewer components than those shown in the figure, or some components may be combined, or some components may be split, or components are arranged in different manners. The components shown in the figure may be implemented by hardware, software, or a combination of software and hardware.

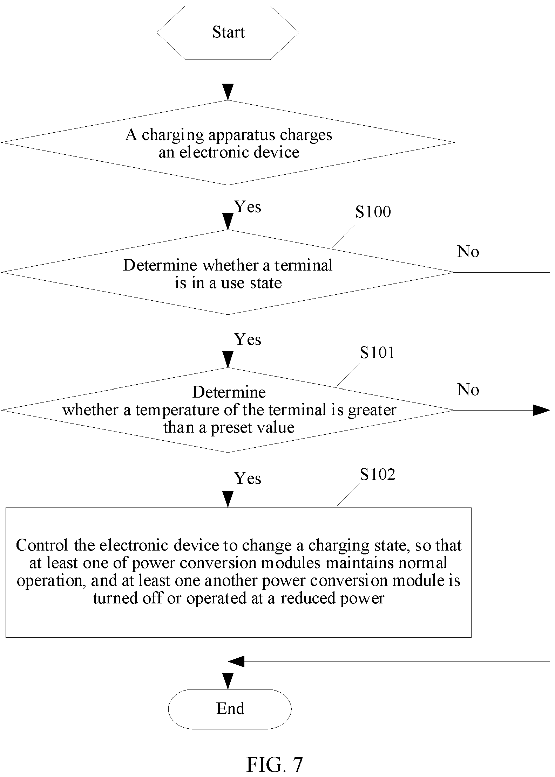

On a basis of the foregoing embodiments, the processor 101 of the electronic device can implement the following functions, and when the electronic device implements a corresponding function, it can be specifically implemented according to a process shown in FIG. 7:

In a process that the charging apparatus charges the electronic device, step S101 is performed in real time or periodically.

S101. Determine whether a temperature of the electronic device is greater than a preset value.

The temperature of the electronic device specifically refers to a detection temperature of any temperature sensor in the electronic device, such as a detection temperature of a temperature sensor near the processor 101, or a detection temperature of a temperature sensor near the battery, or a detection temperature of a temperature sensor near the power conversion module. As long as any of the detection temperatures is greater than the preset value, it indicates that the temperature of the electronic device is greater than the preset value, and step S 102 may be performed.

S 102. Control the electronic device to change a charging state, so that at least one of the power conversion modules maintains normal operation, and at least one another power conversion module is turned off or operated at a reduced power.

The preset value may be determined according to an actual situation. As long as the preset value is less than the thermal current limit temperature Tth mentioned in the foregoing embodiments, the overheating protection action can be performed on the processor 101, and then step S 102 is performed before charging is stopped, thereby avoiding overheating protection by reducing a heat generation amount.

Operating at the reduced power refers to reducing an operating power of a corresponding power conversion module, to operate at a power lower than that of normal operation.

Regardless of using any specific structure provided in the foregoing embodiments, the heat generation amount during charging can be reduced by turning off or operating the at least one power conversion module at the reduced power, which is applicable to charging in both the use state and the standby state. However, if the power conversion module is turned off or operated at the reduced power during charging in the standby state, a charging current is lost and a charging speed is reduced.

Therefore, in an actual application, step S100 may be performed first to determine whether the electronic device is in the use state.

If the electronic device is in the use state, step S101 is performed in real time or periodically again.

For specific setting examples corresponding to FIG. 4 and FIG. 5, step S 102 may specifically be: controlling the Charger1 to maintain normal operation, while the Charger2 is turned off or operated at the reduced power.

Because the Charger1 is far from the processor 101, the Charger1 may continue to be operated when the temperature of the electronic device is not greater than the preset value. However, the Charger2, which is closer to the processor 101, can be turned off or operated at the reduced power, to reduce heat superposition between the Charger2 and the processor 101, and improve the charging speed.

For specific setting examples corresponding to FIG. 4 and FIG. 5, if the electronic device is in the standby state, because there is a certain distance between the Charger1 and the Charger2, there is no need to perform any operation, that is, in a state where the Charger1 and the Charger2 are both operating, it is ensured that heat generation is dispersed, temperature rise is slow, and a speed at which a temperature reaches a preset thermal current limit temperature Tth becomes slower, increasing time of high-current charging and a charging speed.

For a specific setting example corresponding to FIG. 6, step S 102 may specifically be: controlling any at least one power conversion module to maintain normal operation, and at least one another power conversion module is turned off or operated at the reduced power. If the electronic device is in the standby state, high-current charging may be given priority, and no power conversion module is turned off, nor any power conversion module is operated at the reduced power.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device, comprising: a processor, a charging interface, a first battery and a first power conversion module corresponding thereto, wherein
the charging interface is configured to externally connect to a charging apparatus, so that the charging apparatus charges the first battery through the first power conversion module,
a distance between a connection end of the first battery and the first power conversion module is less than a first preset distance, and
a distance between the first power conversion module and the processor is greater than a second preset distance, the second preset distance being greater than the first preset distance.

2. The electronic device according to claim 1, wherein the first power conversion module and the processor are respectively close to different sides in the electronic device.

3. The electronic device according to claim 2, wherein the first power conversion module and the processor are respectively close to opposite sides in the electronic device.

4. The electronic device according to claim 3, wherein the first power conversion module and the processor are respectively arranged on different substrates.

5. The electronic device according to claim 1, further comprising: a second battery and a second power module, wherein
when the charging interface is further configured to externally connect to the charging apparatus, the charging apparatus further charges the second battery through the second power conversion module; and
a distance between a connection end of the second battery and the second power conversion module is less than the first preset distance.

6. The electronic device according to claim 5, wherein an arrangement direction of the second battery in the electronic device is different from that of the first battery.

7. The electronic device according to claim 6, wherein arrangement directions of the second battery and the first battery in the electronic device are opposite.

8. The electronic device according to claim 5, wherein the connection end of the first battery and the connection end of the second battery are connected in parallel through a connection module, to provide system power to the processor.

9. The electronic device according to claim 5, wherein when the electronic device is a foldable phone, the first battery and the second battery are respectively located on two sides of a folding central line of the foldable phone.

10. The electronic device according to claim 1, wherein the first battery corresponds to one or more of the first power modules.

11. The electronic device according to claim 10, wherein when the first battery corresponds to a plurality of the first power modules, a distance between each of the first power conversion modules and the processor is greater than the second preset distance.

12. The electronic device according to any one of claims 1 to 11, wherein the processor is configured to: in a process that the charging apparatus charges the electronic device, determine whether a temperature of the electronic device is greater than a preset value in real time or periodically; and if the temperature of the electronic device is greater than the preset value, control the electronic device to change a charging state, so that at least one of the power conversion modules maintains normal operation, and at least one another power conversion module is turned off or operated at a reduced power.

13. The electronic device according to claim 12, wherein the temperature of the electronic device is: a detection temperature of any temperature sensor in the electronic device.

14. The electronic device according to claim 12, wherein the preset value is less than a preset thermal current limit temperature in the processor.

15. The electronic device according to any one of claims 12 to 14, wherein the processor is further configured to: determine whether the electronic device is in a use state; and if the electronic device is in the use state, determine whether the temperature of the electronic device is greater than the preset value in real time or periodically.

16. The electronic device according to claim 15, wherein when the electronic device further comprises the second battery and the second power conversion module, the processor is configured to control the electronic device to change the charging state, so that at least one of the power conversion modules maintains normal operation, at least one another power conversion module is turned off or operated at the reduced power, and the processor is specifically configured to:
control the first power conversion module of the electronic device to maintain normal operation, and the second power conversion module to be turned off or operated at the reduced power.
